# EUROPÄISCHE PATENTSCHRIFT

(11) **EP 3 102 844 B1**
(45) Veröffentlichungstag und Bekanntmachung des Hinweises auf die Patenterteilung: **01.05.2019**
(21) Anmeldenummer: 15701541.3
(22) Anmeldetag: 29.01.2015
(51) Int. Cl.: F16D 65/12

(54) **VERFAHREN ZUR HERSTELLUNG EINER BREMSSCHEIBE SOWIE BREMSSCHEIBE**
METHOD FOR PRODUCING A BRAKE DISC, AND BRAKE DISC
PROCÉDÉ DE PRODUCTION D'UN DISQUE DE FREIN, ET DISQUE DE FREIN

(30) Priorität: 05.02.2014 DE 102014202068
(43) Veröffentlichungstag der Anmeldung: 14.12.2016
(73) Patentinhaber: Ford Global Technologies, LLC, Dearborn, MI 48126 (US)
(72) Erfinder: BRODA, Maik, 52146 Würselen (DE); VERPOORT, Clemens Maria, 40789 Monheim (DE); BRUGGEN, Ivan, B-3770 Riemst (BE); GRABIEC, Tomasz Pawel, 51427 Bergisch Gladbach (DE); BRETSCHNEIDER, Annett, 08297 Zwönitz (DE); KÜHN, Wolfgang, 08315 Lauter-Bernsbach (DE)
(74) Vertreter: Dörfler, Thomas
(86) Internationale Anmeldenummer: PCT/EP2015/051764
(87) Internationale Veröffentlichungsnummer: WO 2015/117879

(56) Entgegenhaltungen:
- EP-A1- 1 987 267
- DE-A1-102009 003 161
- DE-B1- 1 625 680

## Beschreibung

Die vorliegende Erfindung betrifft ein Verfahren zur Herstellung einer Bremsscheibe für ein Fahrzeug, sowie eine Bremsscheibe für ein Fahrzeug.

Die DE AS 1 625 680 befasst sich mit einem Reibkörper für Nass-Kupplungen und - Bremsen, mit einem Träger und mindestens einem an dem Träger angebrachten, gesinterten, porösen und metallischen Reibbelag. Vorgeschlagen wurde, dass der Reibbelag aus Metallfasern besteht, wobei der Porositätsgrad mindestens 50 % betragen soll. Nachdem der Reibbelag aus gesinterten Metallfasern fest aufgebracht ist, wird eine Email-Fritte in Form eines Breies auf die Reibungsflächen aufgebracht.

In der US 6,032,769 A ist eine Bremsscheibe gezeigt, die einen Basiskörper mit Rippen umfasst. An einem Kern, welcher aus Grauguss bestehen kann, sind Reibringe montiert, indem diese an Tragrippen befestigt sind. Zwischen den Rippen und den Reibringen ist ein Klebstoff angeordnet, um die Verbindung weiter zu sichern, wobei als Klebstoff auch Email genannt ist. Der Klebstoff soll auch ein schallreduzierendes Element sein.

In den Veröffentlichungen RAL, Deutsches Institut für Gütesicherung und Kennzeichnung e.V. ,2007; PETZOLD, Armin; PÖSCHMANN, Helmut, Email und Emailliertechnik, Dt. Verlag für Grundstoffindustrie, 1992 und Dietzel, Adolf H.; Emaillierung, Berlin, Springerverlag 1981, Seite 1,2; S.38 bis 42 und S. 276 sind Emaillen, deren Bestandteile und deren Herstellung und auch Emaillierverfahren offenbart.

In der DE 43 21 713 A1 ist ein zusammengesetzter Scheibenbremsenrotor und ein Verfahren zu dessen Herstellung offenbart. Der Scheibenbremsenrotor kann aus einem Aluminiummatrixverbundwerkstoff mit einem Anteil von 20 bis 30 Gew.-% Siliciumcarbid gegossen werden. Dessen Ringwandoberflächen werden mechanisch aufgeraut, so dass ein Überzug besser auf der Ringwandoberfläche haften kann. Der Überzug wird thermisch aufgetragen, wobei thermische Spritzverfahren, wie z.B. mittels Lichtbogenplasma oder mittels elektrischem Lichtbogen vorgeschlagen werden. Möglich sei auch ein Auftrag mittels Verbrennungsflamme oder mittels Detonationskanone. Der Überzug kann in zwei Schritten erfolgen, wobei ein Zwischenüberzug zwischen der Ringwandoberfläche und einem Außenüberzug aufgebracht werden kann. Als geeignete Materialien wird für den Außenüberzug simuliertes Gusseisen genannt, wobei als Zwischenüberzugsmaterial beispielhaft Nickel in Kombination mit Graphit oder z.B. ein Aluminium/Gusseisenverbundstoff offenbart ist.

Aus der DE 1 285 692 A ist eine Grundemail bekannt, die aus einer oder mehreren Schmelzfritten mit einem SiO2-Gehalt von mindestens 60 % und einem borhaltigen Mühlenzusatz besteht. Der Mühlenzusatz enthält 5 bis 50 Borax bezogen auf die Schmelzfritten.

Aus der DE 10 2010 049 797 A1 ist bekannt, dass eine Bremsscheibe integral mit einer Radnabe hergestellt werden kann, so dass der Planschlag der Bremsscheibe reduzierbar sein soll. Zudem könnten die Reibflächen der Bremsscheibe mit einer Reibbeschichtung versehen sein, die aus einem Hartmetall oder aus einer Keramik bestehen kann.

Die EP 1 987 267 B1 beschäftigt sich mit einer Bremsscheibe, die auf der Verwendung von Materialien beruht, wovon eines eine strukturelle Funktion und das andere eine Bremsfunktion erfüllen soll. Die Bremsscheibe umfasst eine Träger- oder strukturelle Scheibe, deren Seiten mit einer ersten und einer zweiten Reibscheibe ausgerüstet sind. Die Reibscheiben sind aus geeignetem Material zum Erfüllen der Bremsfunktion hergestellt. Die strukturelle Scheibe ist aus Verbundmaterial hergestellt. Das Verbundmaterial der strukturellen Scheibe kann aus einem Harz wahlweise zwischen Epoxid-, Phenol-, Cyanatester-, Cyanepoxid-, Keramikharzen und Email oder einer Kombination aus diesen bestehen. Die Reibscheiben können aus einem zwischen Stahl, Gusseisen, gehärtetem Aluminium, Aluminiumoxid (Keramik), Siliciumcarbid, Siliciumnitrid, Titancarbid und Carbon-Keramik gewähltem Material hergestellt sein.

Bei Fahrzeugen, insbesondere bei Kraftfahrzeugen, bilden Scheibenbremsen die wohl am weitesten verbreitete Bauart von Bremsanlagen. Scheibenbremsen setzen sich im Wesentlichen aus einer Bremsscheibe und einem die Bremsscheibe randseitig umgreifenden Bremssattel zusammen. Hierbei ist die Bremsscheibe über eine drehbar im Achsschenkel gelagerte Radnabe mit dem abzubremsenden Rad des Fahrzeugs verbunden. Demgegenüber ist der Bremssattel an dem Achsschenkel fixiert. Die eigentliche Verzögerung wird durch an die Bremsscheibe anlegbare Bremsklötze erreicht, welche zu beiden Seiten der Bremsscheibe zwischen ihr und dem Bremssattel angeordnet sind.

Je nach Anwendungsfall können Bremsscheiben sowohl aus Eisen, z.B. aus Grauguss (GG) aber auch aus Karbon-Keramik oder Aluminium bestehen. Dabei sollten Bremsscheiben eine möglichst verschleißarme sowie wenig Feinstaub abgebende Oberfläche aufweisen. Um dies zu erreichen, wird eine möglichst harte Oberfläche angestrebt. So wird beispielsweise bei Bremsscheiben aus Aluminium entsprechend Siliziumkarbid (SiC) zugesetzt, welche sich als verschleißfeste Schutzschicht an der Oberfläche ausscheiden. Allerdings ist die Herstellung von Bremsscheiben aus nicht-eisenhaltigen Werkstoffen mitunter schwierig und zumeist kostenintensiv.

Heutige Bremsscheiben bestehen also überwiegend aus GG-Material. Durch den Ersatz des schweren GG-Materials durch Leichtmetalle, also bevorzugt durch Aluminiumwerkstoffe lassen sich pro Bremsscheiben z.B. bei einer unbelüfteten 16" Scheibe ca. 1,9kg Masse einsparen. Neben der Gewichtsreduktion des Gesamtfahrzeuges ergeben sich bei Gewichtseinsparung bei den ungefederten Massen weitere fahrdynamische Vorteile. Das Problem der Al-Scheiben liegt jedoch darin, dass das Al-Material auf der einen Seite einen niedrigen Schmelzpunkt hat und auf der anderen Seite keine ausreichende Verschleißbeständigkeit bzw. geeigneten Reibungskoeffizienten als tribologisch geeignete Funktionsoberfläche für Bremsscheiben aufweist.

Daher sind Bestrebungen bekannt, (siehe oben) durch Zulegieren von Partikelverstärkungsmaterial eine hoch verschleißbeständige Reibfläche bei Bremsscheiben aus Aluminium zu erzielen. Dazu müssen allerdings die Oberflächen nach der mechanischen Vorbearbeitung durch Ätzen in Natronlauge so stark aufgeraut werden, dass die Reiboberfläche mit dem Kontaktpartner des Reibbelages ein funktionierendes tribologisches System bildet und nach technisch sinnvoller Zeit durch Bildung eines sogenannten Transferfilms eine ausreichende Reibleistung übertragen kann. Solche Al-Legierungen können entweder durch das Gießen eines vorlegierten Al-Material (Duralcan®) oder durch pulvermetallurgische Herstellung (PEAK Sprühkompaktieren mit 20 - 40 % SiC) hergestellt werden. Der Nachteil solcher Lösungen liegt jedoch in der niedrigen Duktilität solcher Legierungssysteme sowie in den hohen Kosten der Nachbearbeitung der Bauteile durch Diamantschleifen.

Eine andere Form der Ausbildung einer solchen Schutzschicht kann mit thermischem Spritzen erreicht werden. Hierbei wird das auf die Oberfläche eines Basiskörpers der Bremsscheibe aufzutragende Material zuvor durch Hitzeeinwirkung erweicht und in Form einzelner Partikel über einen Gasstrom beschleunigt. Beim Auftreffen der Partikel entsteht eine rein mechanische Verbindung ohne Aufschmelzen der Oberfläche des Basiskörpers. Bei den Materialien kann es sich um Metalle sowie oxidkeramische oder karbidische Werkstoffe handeln. Nachteilig hierbei ist neben den hohen Kosten insbesondere die Haltbarkeit derartiger Schutzschichten. So ist zumeist nur eine mäßige Aufrauhung der Oberfläche mittels Sandstrahlen möglich, was zu keiner dauerhaft haltbaren mechanischen Verbindung führt. Die Probleme der thermischen Spritzbeschichtung liegen jedoch in den hohen Kosten der Spritzzusatzwerkstoffe, dem niedrigen Auftragswirkungsgrad sowie der Erzeugung einer ausreichenden Haftfestigkeit bei gleichzeitigem Korrosionsschutz. In der DE 10 2005 008 569 A1 z.B. ist beschrieben, dass eine selbstfließende Pulverlegierung auf Nickelbasis durch thermisches Spritzen auf die Bremsscheibe aufgetragen wird, da so bereits vor dem Einschmelzen eine gewisse Grundhaftung vorläge. Nachdem die Bremsscheibe auf Maß gebracht wurde, also vor dem thermischen Beschichten, würden die zu beschichtenden Flächen lediglich sandgestrahlt, um die Oberflächenrauigkeit zu erhöhen, so dass somit gute Voraussetzungen für eine gute Haftung der Spritzschicht schaffbar seien. In der DE 10 2009 003 161 A1 ist offenbart, dass eine Leichtmetallbremsscheibe eine mittels PTWA (plasma transfer wire arc) aufgebrachte thermische Spritzschicht hat. Die Spritzschicht, also die wärmedämmende Reibschicht ist aus einer Nanokristalle aufweisenden Metall-Legierung gebildet.

Weiterhin sind galvanische Ni plus SiC-Verstärkungs-Schichten aus der Literatur bekannt. Diese Schichten sind sehr aufwendig in der Herstellung. Bei den galvanischen Verfahren muss das gesamte Bauteil z.B. mit Chrom oder Nickel oder Ni plus Hartstoffpartikel beschichtet werden. Bei Salzsprühnebeltests schneiden aber sowohl solche galvanischen Beschichtungen als auch thermisch gespritzte Beschichtungen eher schlecht ab: So ist die Unterwanderung von thermischen Spritzschichten selbst mit zusätzlichen Versieglungsverfahren nicht sicher zu vermeiden.

Bei dem Abrieb zwischen dem Bremsbelag und der Bremsscheibe entstehen Partikelemissionen, also Feinstaub. Neben der Feinstaub-Problematik spielt aber auch die optische Wirkung von verrosteten Bremsscheiben in Kombination mit teuren Aluminium-Felgen eine zusätzliche Rolle. Es ist bekannt, dass ca. 70 % der Feinstaubpartikel von dem GG-Scheibenmaterial stammen. Diese Verschleißpartikel, die auch von den Bremsklötzen stammen, haben eine sehr hohe Temperatur von bis zu 700°C, mit der sie auf die Aluminium-Felge auftreffen. Dabei können sie sich in den Klarlack auf der Aluminium-Oberfläche einfach einbrennen und das Entfernen des grau-schwarzen Belags ist selbst in der Waschanlage und bei intensiver Pflege sehr schwierig. Zudem werden zusätzlich Quietschgeräusche oder Bremsenrubbeln bei festgerosteten Belägen nach längerem Stillstand als störend angesehen.

Möglich wäre die gebildeten Feinstaubpartikel durch eine Art Staubsauger hinter der Bremsscheibe aufzufangen und sie in einem Filterelement, z.B. in einem Papierfilter zu sammeln. Dadurch lässt sich zwar die Verschmutzung der Umwelt bzw. die Bildung von dreckigen Aluminium-Felgen verhindern bzw. minimieren, allerdings wird dadurch das grundlegende Verschleiß- und Korrosionsproblem nicht gelöst.

Weder die galvanische Beschichtung noch die thermischen Spritz-Beschichtung erlauben die Herstellung von langzeitig korrosionsbeständigen Reibbelägen mit ausreichender Verschleißbeständigkeit und mit optimalem Reibwert. Aufgrund dieser Mängel der bekannten Verfahren besteht Bedarf für eine geeignete Beschichtung, die alle Forderungen an die sichere Funktion des Bauteils bei minimalen Herstellkosten erfüllt und gleichzeitig aber auch in die Fertigungskette bei der Herstellung von Al-Bremsscheiben integriert werden kann.

Angesichts der aufgezeigten Probleme bietet die einfache und haltbare Fertigung von Bremsscheiben, insbesondere von Aluminiumbremsscheiben als Massenartikel noch Raum für Verbesserungen.

Vor diesem Hintergrund liegt der Erfindung die Aufgabe zugrunde, ein Verfahren zur Herstellung einer Bremsscheibe für ein Fahrzeug vorzustellen, welches eine kostengünstige und dennoch haltbare Massenfertigung ermöglicht. Weiterhin soll eine Bremsscheibe für ein Fahrzeug aufgezeigt werden, welche neben einer kostengünstigen Fertigung insbesondere eine verbesserte Resistenz gegenüber korrosiven Angriffen und eine verbesserte Lebensdauer besitzt.

Der verfahrensmäßige Teil der Aufgabe findet seine Lösung in den Maßnahmen des Anspruchs 1. Der gegenständliche Teil dieser Aufgabe wird durch eine Bremsscheibe mit den Merkmalen des Anspruchs 11 gelöst. Weitere, besonders vorteilhafte Ausgestaltungen der Erfindung offenbaren die jeweiligen Unteransprüche.

Es ist darauf hinzuweisen, dass die in der nachfolgenden Beschreibung einzeln aufgeführten Merkmale sowie Maßnahmen in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Gemäß der Erfindung wird nachfolgend ein Verfahren zur Herstellung einer Bremsscheibe für ein Fahrzeug vorgestellt, bei welchem auf einem Basiskörper der Bremsscheibe zumindest bereichsweise eine Schutzschicht angeordnet wird. Der Basiskörper ist aus Aluminium oder aus einer Aluminiumlegierung gebildet. Erfindungsgemäß umfasst das Verfahren zumindest die folgenden Schritte:
- Vorbearbeiten zumindest der Reibflächen des im Rohling vorliegenden Basiskörpers;
- Aufbringen einer Email-Beschichtung als Korrosions- und/oder Verschleißschutzschicht zumindest auf die Reibflächen des Basiskörpers, und
- Nachbehandlung des zumindest bereichsweise beschichteten Basiskörpers, wobei sich die Email-Beschichtung mit dem Grundwerkstoff des Basiskörpers metallurgisch verbindet.

Bei der erfindungsgemäßen Email-Beschichtung handelt es sich bevorzugt um ein Schmelzgemisch. Bei der Emailtemperatur schmelzen die glasbildenden Oxide zu einer Glasschmelze zusammen. Glasbildende Oxide können dabei SiO₂, B₂O₃, Na₂O, K₂O und Al₂O₃ sein. Grundemails weisen Borax, Feldspat, Quarz, Fluorid, sowie als Rest Soda und Natriumnitrat auf. Als Trübungsmittel können die Oxide von Ti, Zr und Mo dienen.

Eine bevorzugte Email-Beschichtung weist die beispielhafte Zusammensetzung der Gewichtsanteile auf:

| Oxid | Gewichtsanteil |
|---|---|
| SiO₂ | 5 - 50 % |
| BaO | 2 - 20% |
| B₂O₃ | 0,5 - 10 % |
| Li₂O | 0,5 - 15 % |
| K₂O | 5 - 30 % |
| Na₂O | 5 - 44 % |
| Sb₂O₃ | 0,5 - 25 % |
| TiO₂ | 2 - 40 % |

Zum Erreichen einer höheren mechanischen Festigkeit wird der Email-Beschichtung ein bestimmter Anteil an Erdalkalialuminaten zugefügt. Der Anteil von Erdalkalialuminat kann bezogen auf die eingewogene Emailfrittenmenge zwischen 3 und 35 % betragen. Zur weiteren Erhöhung der Festigkeit kann dem Erdalkalialuminat noch ein molarer Anteil an Seltenen Erden zugefügt werden. Das Erdalkalialuminat wird vorzugsweise in Form von Portlandzement beigefügt (Erdalkalisiliziumaluminat). Dabei ist von Bedeutung, dass eine hohe Mahlfeinheit gewählt wird, um eine hohe Festigkeit zu erreichen. Bei Verbindung mit Wasser (H₂O) bilden sich Calziumsilikathydrate in Form feiner nadelförmiger Kristalle aus, die sich untereinander verzahnen und damit zu hoher Festigkeit führen.

Die genannten Stoffe werden in bevorzugter Ausgestaltung fein gemahlen und geschmolzen. Die Schmelze wird abgeschreckt, also bevorzugt in Wasser gegeben, wobei die so entstehende körnige glasartige Fritte (Emailfritte) im sich anschließenden Schritt wieder fein gemahlen wird. Beim Mahlvorgang werden beispielsweise 30 % bis 40 % Wasser zusammen mit Ton und Quarzmehl zugesetzt. Je nach Art des Emails kommen noch die erwähnten Trübungsstoffe und Farboxide hinzu.

So wird ein Emailschlicker gebildet, welcher zur besseren Mischung einige Zeit, bevorzugt einige Tage ruhen sollte, bevor der Emailschlicker weiterverwendet würde. Durch Verwendung geeigneter Stellmittel wird sichergestellt, dass sich eine gleichmäßige Schichtdicke z.B. nach einer Tauchbeschichtung ergibt, wobei auf eine mögliche Tauchbeschichtung noch näher eingegangen wird.

Als Grundwerkstoff für die Bremsscheibe, also für den Basiskörper ist, wie bereits erwähnt, Aluminium oder eine Aluminiumlegierung vorgesehen.

Die Bremsscheibe, also deren Basiskörper, z.B. für unbelüftete Bremsscheiben kann durch Tiefziehen/Schmieden hergestellt werden aus einer Schmiedelegierung, z.B. Al6061. Möglich ist auch die Bremsscheibe durch Gießverfahren z.B. Niederdruck Kokillen- oder Sandguss oder im HPDC-Prozess (High Pressure Die Casting) herzustellen. Für den anschließenden Oberflächenbeschichtungsprozess und die notwendige hohe Glühtemperatur sind also auch verschiedene Gießverfahren zur Herstellung der Bremsscheiben geeignet. Bei Verwendung des HPDC Prozesses sollte jedoch ein besonders gutes Vakuum verwendet werden, um bei der notwenigen Glühoperation (siehe weiter unten) das Entstehen von Blasen zu verhindern (Blistering-Problem).

Dabei weist der Basiskörper, also der Rohling einen umlaufenden äußeren Bremskranz auf, welcher für den Kontakt mit einem Bremsklotz eines Bremssattels vorgesehen ist, wobei die Bremsklötze bzw. Bremsbeläge natürlich beidseitig des Bremskranzes, also der Reibflächen angreifen. Im Zentrum des Basiskörpers ist eine Öffnung vorgesehen, welche in einer Ausstellung des Basiskörpers angeordnet ist. Um die Öffnung herum sind in gleichmäßigen Abständen bevorzugt fünf Durchgangslöcher durch die Ausstellung hindurch angeordnet. Besagte Durchgangslöcher dienen der Aufnahme von Radbolzen, über welche die Bremsscheibe zusammen mit einem Rad mit einer Radnabe verbindbar ist. Die Ausstellung, welche auch als Scheibenhut bezeichnet werden kann, kann integral mit dem Bremskranz hergestellt werden, also auch gegossen werden, oder als separates Element mit dem Bremskranz in geeigneter Weise verbunden werden. Der Basiskörper kann als unbelüftete oder belüftete Bremsscheibe hergestellt sein, was an sich bekannt ist. Bei der belüfteten Bremsscheibe sind die Reibflächen an Deckscheiben angeordnet, wobei die gegenüberliegenden Deckscheiben über Rippen beabstandet sind. Jede Deckscheibe weist natürlich auch nur eine Reibfläche auf, was aber an sich bekannt ist. So ist ein Luftspalt zwischen den Deckscheiben gebildet, was aber an sich auch bekannt ist, weswegen darauf nicht weiter eingegangen wird.

Dieser Rohling wird sodann zumindest bereichsweise vorbearbeitet, wobei erfindungsgemäß zumindest die zukünftigen Reibflächen vorbearbeitet werden. Die Vorbearbeitung kann mittels mechanischer Verfahren erfolgen, wobei die Vorbearbeitung bevorzugt mittels Drehverfahren, weiter bevorzugt mittels Trocken-Drehverfahren (trockendrehen) durchgeführt wird. Dabei werden die zu beschichtenden Bereiche, also z.B. die Reibflächen bevorzugt so bearbeitet, dass diese eine Rauigkeit von z.B. 5 bis 15 µm aufweisen. Zur Vorbearbeitung ist auch ein Sandstrahlen möglich, wobei noch andere geeignete Vorbearbeitungsverfahren nicht ausgeschlossen sein sollen. Grundsätzlich kann das Vorbearbeiten also durch grobes Drehen oder durch Drehen mit zusätzlichen Korundstrahlen erfolgen.

Sind zumindest die Reibflächen vorbearbeitet, kann die Email-Beschichtung aufgetragen werden. Dies kann mittels Aufsprühen erfolgen, wobei aber auch ein Auftragen durch Streichen oder in einem Tauchbad sinnvoll sein kann. Insofern ist es zweckmäßig, wenn die Beschichtung, also der Emailschlicker als Nass-Email-Beschichtung aufgebracht wird.

Bei dem Aufsprühen ist sinnvoll vorgesehen, dass die Email-Beschichtung als wässrige Suspension (Emailschlicker) aufgetragen wird. Vorteilhaft ist dabei, dass zumindest der vorbearbeitete Bereich sehr gut erreichbar ist, da die Sprühvorrichtung individuell den zu beschichtenden Bereich abdecken kann. Die Beschichtung kann so aufgebracht werden, dass bevorzugt der Basiskörper rotiert. Möglich ist, die Bremsscheibe mit 60 bis 120 U/min rotieren zu lassen. Die Email-Beschichtung kann mit einem Druck von z.B. 2 bis 4 bar durch Zerstäuben mit Druckluft aufgesprüht werden. So kann die Email-Beschichtung innerhalb kürzester Zeit von z.B. 20 Sekunden in der gewünschten Materialstärke aufgetragen werden, wobei die Förderrate des Emailschlickers durch automatische Parameterüberwachung, z.B. mittels computergesteuerten Spritzrobotern in engen Grenzen regelbar ist, um die jeweilige Email-Beschichtung mit jeweils geringen Dickenschwankungen herstellen zu können. Bei dem erfindungsgemäßen Verfahren kann ein einstufiger Email-Beschichtungsvorgang gewählt. Insofern kann auf das getrennte Auftragen von Grundemail und Deckemail verzichtet werden, da nur ein einstufiges Aufbringen bevorzugt ist. Möglich ist auch, zunächst eine dünnere Schlickerschicht aufzutragen, und diese zu trocknen, wobei dieser Vorgang mehrfach wiederholt werden kann, um die gewünschte Schichtdicke aufzutragen. Eine rotierende Sprühvorrichtung ist bei feststehender zu beschichtender Scheibenbremse auch möglich, aber nicht bevorzugt. Insofern kann lediglich der Bereich der Reibflächen mit der Email-Beschichtung versehen werden. Dies kann so bei unbelüfteten, aber auch bei belüfteten Bremsscheiben erfolgen. In weiter möglicher Ausgestaltung kann der Basiskörper in einem Tauchbad beschichtet werden, wobei ebenfalls eine wässrige Lösung (Emailschlicker) vorgesehen ist. Auch hierbei kann lediglich der Bremskranz, also lediglich die Reibflächen beschichtet werden. Dabei wird der Basiskörper nicht vollständig in das Tauchbad eingetaucht, sondern lediglich so tief, dass der Bremskranz bereichsweise eintaucht. Durch Rotation der Bremsscheibe wird so der gesamte Bremskranz beschichtet. Insbesondere eine belüftete Bremsscheibe ist sinnvoller Weise mittels des Tauchbades mit der Email-Beschichtung zu versehen, da die Nass-Email-Beschichtung auch vollständig in den Zwischenraum zwischen beiden Deckscheiben gelangen kann so dass auch die den Reibflächen gegenüberliegenden Innenflächen beschichtet werden können, wobei natürlich die Rippen ebenfalls beschichtet werden können. Eine Beschichtung des Zwischenraumes führt zu dem zielführenden Ergebnis eines vollständigen Korrosionsschutzes, wodurch die Lebensdauer der Bremsscheibe ersichtlich verlängert wird, wobei natürlich der zusätzliche Verschleißschutz an den Reibflächen aufgrund der dortigen Email-Beschichtung ebenfalls zur Lebensdauerverlängerung beiträgt.

Anstelle einer bereichsweisen Beschichtung, bei welcher nur der Bremskranz, also die Reibflächen beschichtet werden, kann der Basiskörper auch vollständig beschichtet werden. So ist die Bremsscheibe dann vollständig gegen Korrosion geschützt. Zweckmäßig ist dann vorgesehen, dass der Basiskörper auch vollständig vorbearbeitet wird. Eine Vorbearbeitung in dem Zwischenraum der beiden Deckscheiben kann vorgesehen werden, wenn dies sinnvoll durchführbar ist.

Möglich ist dabei wiederum eine Email-Beschichtung mittels einer Sprühvorrichtung oder im Tauchbad vorzusehen. Im Tauchbad wird die Bremsscheibe vollständig eingetaucht, wenn die Bremsscheibe vollständig beschichtet werden soll. Eine Rotation derselben ist nicht erforderlich, kann aber angestrebt werden. Wird die Email-Beschichtung mittels der Sprühvorrichtung aufgebracht, können zumindest in ihrer Farberscheinung unterschiedliche Email-Beschichtungen aufgetragen werden. Die Ausstellung, also der Scheibenhut z.B. könnte auch bei Lichtmangel hellleuchtend ausgeführt sein. Dies ist sinnvoll, da die Ausstellung selbst keinen Reibkräften ausgesetzt ist, wie die Reibflächen. Gleichwohl könnten natürlich auch die Reibflächen mit einer bestimmten Farberscheinung ausgeführt werden, wenn sichergestellt wäre, dass die Farberscheinung auch nach dem Angreifen der Bremsbeläge, also nach Verschleiß an den jeweiligen Reibflächen unverändert bliebe.

Ist die Bremsscheibe zumindest bereichswiese beschichtet, wird diese in einem weiteren Schritt nachbehandelt. Dazu ist vorteilhaft vorgesehen, dass die Email-Beschichtung nach dem Auftragen zunächst getrocknet wird, wobei anschließend eine Glühbehandlung vorgesehen ist. Zum Trocknen der Email-Beschichtung wird die Bremsscheibe einer Trockenvorrichtung zugeführt, wobei die Email-beschichtete Bremsscheibe bei etwa 60 bis 80°C, auch bei etwa 80 bis 120°C über eine Zeitdauer von 5 bis 30 min getrocknet wird. In möglicher Ausgestaltung des Verfahrens wird der Trocknungsvorgang in einem Umluftofen durchgeführt. Zur sich anschließenden Wärmebehandlung wird die Email-beschichtete Bremsscheibe in einem Durchlaufofen bei etwa 550°C beispielsweise im Durchlaufofen geglüht, also eingeschmolzen. So kann sich die Email-Beschichtung metallurgisch mit den Grundwerkstoff des Basiskörpers verbinden. Die Verbindung zwischen der Email-Beschichtung und der Aluminiumoberfläche entsteht durch die Bildung von Verzahnungen, die zum Beispiel durch die Auflösung von Al₂O₃ in der Reaktionsgrenze zwischen dem Aluminium und der Email-Beschichtung entstehen. Dabei diffundiert Si⁴⁺ an die Aluminiumoberfläche und wird dort zu Si reduziert. Außerdem wirkt die Anlaugung der Aluminiumoberfläche durch die Alkalien im Emailschlicker haftungsfördernd. Bei diesem Einbrennvorgang wird das Ausbilden einer dichten, geschlossenen Oxid-Schicht erreicht, die gegenüber dem Korrosionsangriff von Regenwasser und insbesondere auch Salzwasser sehr widerstandsfähig ist. Insofern ist die erste Funktion der Email-Beschichtung als Korrosionsschutzbeschichtung erreicht.

Erfindungsgemäße Email-Beschichtungen zeichnen sich gegenüber den Galvanik- oder Spritzbeschichtungen dadurch aus, dass sie nicht unterwandert werden können. Wenn Schutzschichten unterwandert werden, dann bildet sich die Al-Oxid-Phase unter der Beschichtung aus, was dann zu einer starken Volumenvergrößerung, verbunden mit dem Abplatzen der Deckschicht, führt. Zielführend ist auch, dass erfindungsgemäße Email-Beschichtungen auch dann nicht weiter geschädigt werden, wenn durch lokalen Schaden (Steinschlag, mechanische Beschädigung) die Schicht bis zum Grundwerkstoff abgetragen ist. Es wird dann nur im Bereich der fehlenden Email-Beschichtung ein Korrosionsschaden auftreten, sich aber nicht weiter vergrößern. Ein weiterer Vorteil der erfindungsgemäßen Email-Beschichtung ist darin zu sehen, dass diese ein sehr niedriges Gewicht hat, was in der chemischen Zusammensetzung der Aluminiumoxide, Silikate usw. sowie in der Email-typischen Poren und Blasenstruktur begründet ist.

Neben dieser guten Korrosionsbeständigkeit zeichnet sich die erfindungsgemäße Email-Beschichtung aus durch gute Verschleißbeständigkeit aufgrund der hohen Schichthärte von 600 bis 800 HV0,1, die also eine bis zu vierfach höhere Härte besitzen kann als bei dem Aluminium-Basismaterial. Insofern weist die Email-Beschichtung die zweite Funktion als Verschleißschutzschicht auf, wobei die Email-Beschichtung quasi den Reibpartner der Bremsscheibe für die Bremsklötze, also für deren Reibbeläge bildet. Die Beständigkeit gegen Verschleiß und/oder Thermorisse kann weiter gesteigert werden durch die Verwendung von sog. "teilkristallinen Emails", bei denen kristallisierende Ausscheidungen in der Glasmatrix die Verschleißbeständigkeit gegenüber konventionellen Emails erhöhen. Zielführend ist auch, dass das Verschleißverhalten der Emails drastisch verbessert werden kann durch Einlagerung von nanoskaligen Hartstoffen. Diese karbidischen Hartstoffe setzen dem Verschleiß einen deutlich höheren Widerstand entgegen als die amorphe Emailmatrix. Durch Variation der Karbid-Partikelgröße lässt sich der Verschleißwiderstand weiter optimieren.

Als Grundwerkstoff wird wie oben bereits gesagt Aluminium oder eine Aluminiumlegierung Verwendung finden. Zuvor und nachfolgend wird aber von Aluminium gesprochen, wobei Aluminium aber auch eine Aluminiumlegierung umfasst sein soll.

Optional kann die Email-Beschichtungsoberfläche nach dem Schritt des Einbrennens noch einer Schlußbehandlung, also einem Finish unterzogen werden. Bevorzugt ist vorgesehen, die Reibflächen drehend zu bearbeiten und die Oxidschicht, welche aufgrund des Glühprozesses entstanden ist, zu entfernen.

Die Bremsscheiben können natürlich ohne jegliche Bearbeitung im Bereich der Reibfläche verwendet werden. Durch Verwendung von dünneren Email-Schichten zur Einsinterung der Schichten unter rotierender Bewegung lässt sich ein möglicher Höhenschlag und auch die Rauigkeit minimieren. Möglich ist auch, eine Nachbearbeitung der Scheiben durch ein Nachschleifen, wobei Diamant- oder Hartstoff-Topfscheiben zum Einsatz kommen. Denkbar ist eine Nachbearbeitung mittels Drehen, was trotz der hohen Härte aufgrund der Sprödigkeit machbar ist, wobei PKD (Polykristalliner Diamant) Wendeschneidplättchen bevorzugt sind. Nach der Finish-Bearbeitung kann die Email-Beschichtung zumindest im Angriffsbereich der Reib- also Bremsbeläge Rauigkeitswerte von Ra : 0,02 bis 0,05µm und Rz : 0,09 bis 0,26 µm haben, wobei die Beträge natürlich nur beispielhaft genannt sein sollen.

Zielführend ist, wenn eine Email-Beschichtung mit einer Schichtdicke von 50 µm bis 1000 µm aufgetragen wird. Damit lassen sich Bremsscheiben herstellen, die eine Lebensdauer von mehr als 240.000 km aufweisen könnten, abhängig von der Schichtdicke der Email-Beschichtung.

Damit die Verschleißbeständigkeit ausreichend hoch ist, hat es sich als nützlich erwiesen, die Zusammensetzung der Email-Beschichtung so anzupassen, dass nach dem Einsintern, also nach dem Glühvorgang Härtewerte von beispielsweise 650 HV0,1 vorliegen. Außerdem ergibt sich mit dieser Zusammensetzung eine nicht komplett durchgeschmolzene glasartige Email-Beschichtung mit den email-typischen glatten Oberflächen, sondern eher rauen Oberfläche, hervorgerufen durch den höheren Anteil an kristallinen Phasen. Idealerwiese kann der Kristall-Anteil 20 %, aber auch 30 - 50 % betragen.

Das Emaillier-Verfahren gemäß der Erfindung ist aufgrund der hervorragenden Korrosions- und Verschleißbeständigkeit der Reibschicht besonders geeignet zum Herstellen von Aluminium-Bremsscheiben. Darüber hinaus liefert das erfindungsgemäße Verfahren die Möglichkeit, durch Zugabe von bestimmten Oxiden die Reibwerte in weiten Grenzen so einzustellen, dass konventionelle Reibbeläge verwendet werden können, wobei sowohl die Korrosionsbeständigkeit als auch die Verschleißbeständigkeit im Bezug auf konventionelle Graugussbremsscheiben erheblich verbessert sind.

Die Email-Beschichtung kann zusätzlich eingefärbt werden, wodurch individuell verschiedene Farben gewählt werden können, wie bereits oben erwähnt wurde, wobei die Email-Beschichtung die Farbe auch zeigt, wenn bereits ein Verschleißabtrag vorliegt. Daraus resultiert erfreulicher Weise ein Sicherheitsaspekt, auf den unten noch eingegangen wird.

Mit der Erfindung kann eine Email-Beschichtung auf der gesamten Bremsscheibe als Korrosionsschutz aufgebracht werden, wobei die Email-Beschichtung auch nur im Bereich der Reibfläche, als Verschleiß-Belag mit angepasstem Reibungskoeffizient (Vermeidung von Grind Noise) aufgebracht werden kann, so dass die Email-Beschichtung als Reibpartner für die Bremsbeläge dient. Die Email-Beschichtung kann als fluoreszierender, dekorativer, leicht zu reinigender Belag im Bereich außerhalb der Reibbelag-Anlagefläche aufgebracht werden, wobei die Email-Beschichtung im Anlagebereich (Scheibenhut, Topf) aufgebracht werden kann, um den Ausbau der Bremsscheibe (Verhinderung des Festsetzens an Radnabe) zu erleichtern. Grundsätzlich ist die Email-Beschichtung auch in diesem Bereich vorteilhafter als andere Schicht- oder Lackiersysteme, da sich die dicht geschlossene Email-Beschichtung leichter reinigen lässt, auch weil eventuell heiße Staubpartikel aus dem Bremsbelag sich nicht so leicht in die Email-Beschichtung einbrennen können. Das erfindungsgemäße Verfahren kann die Schritte Vor-Bearbeiten, Auftragen des Schlickers durch Tauchen/Sprühen, Trocken und Einsintern sowie Nacharbeit zur Erzielung einer gewünschten Rauigkeit aufweisen. Die Email-Beschichtung kann zudem eine wärmedämmende Wirkung haben, so dass die entstehende Wärme nicht so schnell abgeführt würde.

Obwohl ein einstufiges Beschichtungsverfahren bevorzugt ist, ist es möglich, dass die Bremsscheibe vollständig in einem kostengünstigen Emailschlicker eintaucht, was besonders bei belüfteten Scheiben mit den vielen Stegen zwischen den beiden Deckscheiben zweckmäßig ist, wobei dann in einem nachfolgenden Sprühauftrag im Bereich zwischen Reibbelagsfläche und Topf-Anlagefläche (Scheibenhut), also im Angriffsbereich des Bremsbelages, eine hochwertige, farbige Emailschicht aufgetragen wird. Insofern kann im nicht dem abrasiven Verschleiß der Bremsscheibe unterliegenden Bereich eine Email-Beschichtung aufgebracht werden, welche kostengünstig und nicht so verschleißresistent ist, welche aber so eingestellt sein sollte, dass der gleiche Temperaturbereich zum Einsintern vorliegt, wie die Email-Beschichtung, welche im abrasiven Bereich aufgebracht ist. Grundsätzlich ist mit der Email-Beschichtung ein Grind-Noise-Problem durch das Anbacken des Bremsbelags, wie dies bei konventionellen Graugussbremsscheiben auftreten kann vermieden. Ist die Emailschicht farblich ausgeführt, kann diese zudem genutzt werden beispielsweise einen bald bevorstehenden und erforderlichen Austausch der Bremsscheibe anzuzeigen. Ist die farbliche Emailschicht auf der Bremsfläche nach gewisser Zeit abgetragen, also wenn zum Beispiel der Grundwerkstoff mit seinem typischen Erscheinungsbild erkennbar ist, kann dies als Anzeichen genutzt werden, die Bremsscheibe bald austauschen zu müssen. Schimmert zum Beispiel der silbrige Glanz des Aluminiums durch die farbliche Emailbeschichtung durch, kann auch ein fachunkundiger Benutzer leicht erkennen, dass die Bremsscheibe auszutauschen ist. Insofern ist erfreulicher Weise noch ein weiteres Sicherheitsmerkmal geschaffen.

Bevorzugt weisen die mit einer Email-Beschichtung versehenen Kanten des Basiskörpers einen Radius R auf, der mindestens 3-mal größer ist als die Schichtdicke der Email-Beschichtung im Bereich des Radius der Kanten. Damit wird eine gleichmäßige Schichtdicke im Bereich von Kanten sichergestellt. Bei zu scharfen Übergängen bzw. Kanten kann die dort entstehende Emailschicht zu dünn werden.

Erfindungsgemäß ist also vorgesehen, eine Email-Beschichtung zumindest auf die Reibflächen der Bremsscheibe aufzutragen, und diese Email-Beschichtung zumindest als Reibpartner für die Bremsbeläge zu verwenden. So kann unter anderem der sonst entstehende, heiße Feinstaub vermieden werden, welcher sich ansonsten in Leichtmetallfelgen einbrennen würde, wenn die Leichtmetallbremsscheibe z.B. mittels simulierten Gusseisen überzogen würde. Zielführend ist im Sinne der Erfindung, dass die so hergestellte Bremsscheibe unter Verwendung der Email-Beschichtung als Korrosions- und Verschleißschutzschicht eine wesentlich längere Lebensdauer hat, als konventionelle Bremsscheiben, oder Bremsscheiben, welche eine z.B. mittels thermischer Spritzverfahren z.B. mit selbstfließenden Pulverlegierungen aufgebrachte Beschichtung aufweist.

Möglich ist auch die Email-Beschichtung so auszuführen, dass diese durch Wärmeeintrag erleuchtet wird, wobei Email-Beschichtungen denkbar sind, welche ohne zuvorige Lichtbestrahlung leuchten können. Grundsätzlich kann die gesamte Bremsschiebe eine fluoreszierende Email-Beschichtung aufweisen, so dass sich ein zusätzlicher Sicherheitsaspekt bei Nachtfahrten ergibt. Möglich ist auch, die Aluminiumbremsscheibe bezogen auf bekannte Vorgehen mit dem erfindungsgemäßen Vorgehen dünner auszuführen, wobei diese beispielsweise 1,75 mm dünner sein können, da die harte Email-Beschichtung quasi keinerlei Verschleiß auf der Reibfläche zeitigt (wenn besonders hochwertige Email-Beschichtungen gewählt werden). Des Weiteren ist die Bremsscheibe vorteilhaft mit einer Email-Beschichtung versehen, also gewichtsoptimiert, da die Email-Beschichtung aus leichten Oxiden mit einem spezifischen Gewicht von 1,2 bis 2,0g/cm³ besteht, so dass die Email-Beschichtung quasi halb so schwer ist, wie eine vergleichbare Schicht aus Aluminium, wobei die Email-Beschichtung eine sehr viel höhere Verschleißbeständigkeit aufweist.

Weitere vorteilhafte Einzelheiten und Wirkungen der Erfindung sind im Folgenden anhand von unterschiedlichen, in den Figuren dargestellten Ausführungsbeispielen näher erläutert. Es zeigen:
- Fig. 1: eine schematische Darstellung einer erfindungsgemäßen Bremsscheibe in einer Aufsicht,
- Fig.2: Die Bremsscheibe aus Figur 1 in einer Schnittansicht,
- Fig. 3: einen Detailausschnitt aus Figur 2, und
- Fig. 4: eine belüftete Bremsscheibe in einer perspektivischen Ansicht.

In den unterschiedlichen Figuren sind gleiche Teile stets mit denselben Bezugszeichen versehen, so dass diese in der Regel auch nur einmal beschrieben werden.

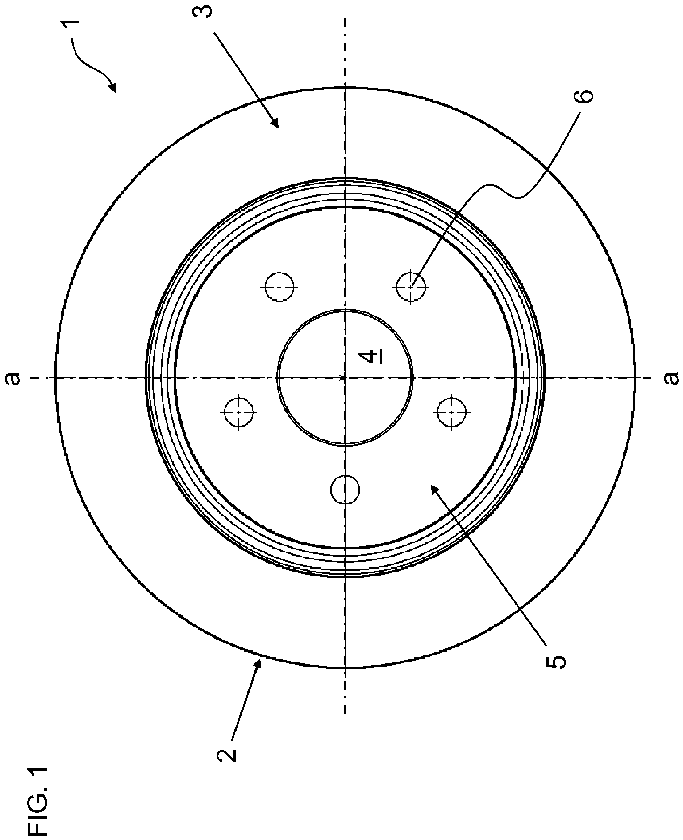

Fig. 1 ist eine schematische Darstellung einer erfindungsgemäßen Bremsscheibe 1 zu entnehmen. Diese weist einen kreisrunden Basiskörper 2 beispielhaft aus Aluminium, also z.B. Al6061 auf. Der Basiskörper 2 besitzt in typischer Weise einen umlaufenden äußeren Bremskranz 3, welcher für den Kontakt mit einem nicht näher dargestellten Bremsbelag vorgesehen ist. Im Zentrum des Basiskörpers 2 ist eine Öffnung 4 vorgesehen, welche in einer Ausstellung 5 des Basiskörpers 2 angeordnet ist. Die Ausstellung 5 kann auch als Scheibenhut 5 bezeichnet werden. Um die Öffnung 4 herum sind in gleichmäßigen Abständen vorliegend fünf Durchgangslöcher 6 durch die Ausstellung 5 hindurch angeordnet. Besagte Durchgangslöcher 6 dienen der Aufnahme hier nicht näher dargestellter Radbolzen, über welche die Bremsscheibe 1 zusammen mit einem nicht gezeigten Rad mit einer ebenfalls nicht gezeigten Radnabe verbindbar ist.

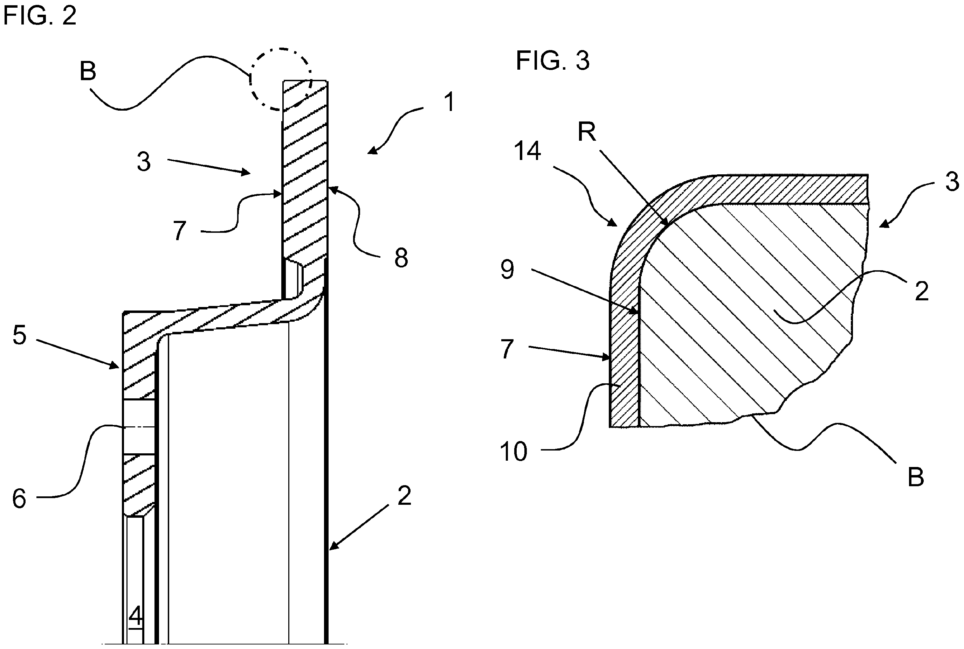

Fig. 2 zeigt einen Schnitt durch die Ebene a-a der Bremsscheibe 1 aus Fig. 1. Wie zu erkennen, steht die Ausstellung 5 gegenüber dem Bremskranz 3 des Basiskörpers 2 vor. Der Bremskranz 3 umfasst zwei parallel zueinander ausgerichtete Bremsflächen, also Reibflächen 7, 8, also eine erste Reibfläche 7 und eine zweite Reibfläche 8. In Figur 2 ist ein strichpunktierter Kreis B eingezeichnet, wobei der Bereich des Bremskranzes 3 innerhalb des Kreises B Inhalt der Fig. 3 ist.

Fig. 3 zeigt einen Detailausschnitt des Bremskranzes 3 aus Fig. 2 innerhalb des Kreises B. Der Vergrößerung des Bremskranzes 3 im Bereich seiner ersten Reibfläche 7 ist zu entnehmen, dass auf einer Oberfläche 9 des Basiskörpers 2 in diesem Bereich eine Email-Beschichtung 10 aufgebracht ist. Die Email-Beschichtung 10 bedeckt hier auch die äußere Umfangsfläche. Insofern kann die gesamte Bremsscheibe 1 eine Email-Beschichtung 10 aufweisen. Denkbar ist aber auch, wenn nur die Reibflächen 7 und 8 die Email-Beschichtung 10 aufweisen. Die Email-Beschichtung 10 hat eine Doppelfunktion. Zum einen übernimmt die Email-Beschichtung 10 den Korrosionsschutz der Bremsscheibe 1. Zum anderen übernimmt die Email-Beschichtung 10 gleichzeitig die Funktion als Reibschicht der Bremsscheibe 1.

Die Kante 14 ist mit einem Radius R ausgeführt, damit in diesem Bereich eine gleichmäßige Emailschicht aufgetragen wird. Dabei beträgt der Radius R ungefähr das 3-fache der Schichtdicke der Email-Beschichtung 10. Größere Radien sind unproblematisch, bei kleineren Radien kann die Schichtdicke im Bereich der Kante 14 ungleichmäßig verteilt sein.

Die Email-Beschichtung 10 kann auch zumindest bereichsweise auf der Bremsscheibe aufgebracht werden, wobei nur die Reibflächen 7 und 8 mit der Email-Beschichtung 10 versehen sind. Möglich ist aber auch, wie erwähnt, die Bremsscheibe 1 vollständig mit der Email-Beschichtung zu versehen. Die Email-Beschichtung kann mittels Sprühvorrichtungen oder im Tauchbad aufgebracht werden.

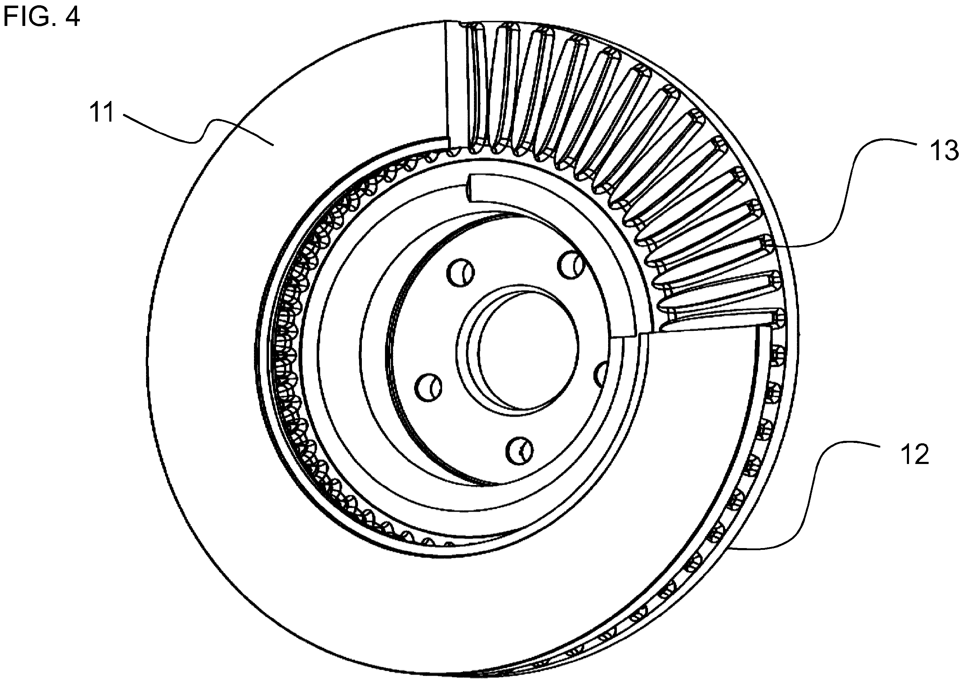

Figur 4 zeigt eine Bremsscheibe 1, welche Deckscheiben 11 und 12 aufweist zwischen denen Rippen 13 angeordnet sind, so dass eine belüftete Bremsscheibe 1 gebildet ist. Auch die belüftete Bremsscheibe kann die Email-Beschichtung 10 nur an ihren Reibflächen 7 und 8 aufweisen. Günstig ist aber, wenn die belüftete Bremsscheibe 1 vollständig mit Emaille beschichtet ist. Dazu kann die belüftete Bremsscheibe 1 in ein Tauchbad gegeben werden, so dass auch die Innenflächen der einander gegenüberliegenden Deckscheiben 11 und 12 sowie die Rippen 13 mit Emaille beschichtet sind.

Möglich ist auch, wenn die Bremsscheibe 1 unterschiedliche Email-Beschichtungen aufweist. So ist bevorzugt an den Reibflächen 7 und 8 eine Beschichtung wählbar, welche die genannte Doppelfunktion mir den erforderlichen Reibkoeffizienten hat, so dass die Funktion der Bremsscheibe 1 bestehen bleibt. An den außerhalb der zum Verzögern des Fahrzeuges erforderlichen Flächen kann die Bremsscheibe eine Email-Beschichtung aufweisen, welche eine weitere Funktion z.B. in Form von Signalwirkungen hat, so dass diese auch bei Dunkelheit hell leuchtet. Es liegt durchaus im Sinne der Erfindung auch die Reibflächen mit entsprechender signalisierender Email-Beschichtung zu versehen.

Auf jeden Fall sollte die Bremsscheibe vor dem Aufbringen der Email-Beschichtung 10 zumindest bereichsweise vorbearbeitet werden. Günstig ist, den Bereich der Bremsscheibe 1 zu bearbeiten, welcher auch beschichtet werden soll.

Nach dem Aufbringen der Email-Beschichtung 10, ist ein Trocknen sowie eine Glühbehandlung vorgesehen. Optional kann noch eine mechanische Nachbearbeitung vorgenommen werden.

### Bezugszeichenliste

- 1: Bremsscheibe
- 2: Basiskörper
- 3: Bremskranz
- 4: Öffnung
- 5: Ausstellung/Scheibenhut
- 6: Durchgangsloch
- 7: erste Bremsfläche/Reibfläche
- 8: zweite Bremsfläche/Reibfläche
- 9: Oberfläche
- 10: Email-Beschichtung
- 11: Deckscheibe
- 12: Deckscheibe
- 13: Rippen
- 14: Kante
- R: Radius

## Patentansprüche

1. Verfahren zur Herstellung einer Bremsscheibe (1) für ein Fahrzeug, bei welchem auf einem Basiskörper (2) der Bremsscheibe (1) mit Reibflächen (7,8) eine Schutzschicht angeordnet wird, wobei der Basiskörper (2) aus Aluminium oder aus einer Aluminiumlegierung gebildet und eine Email-Beschichtung (10) zumindest an den Reibflächen (7,8) angeordnet ist, umfassend zumindest die folgenden Schritte:
- Vorbearbeiten zumindest der Reibflächen (7,8) des im Rohling vorliegenden Basiskörpers (2);
- Aufbringen einer Email-Beschichtung (10) zumindest an den Reibflächen (7,8) der Bremsscheibe (1) als Korrosions- und/oder Verschleißschutzschicht, und
- Nachbehandlung des zumindest bereichsweise beschichteten Basiskörpers (2), wobei sich die Email-Beschichtung (10) mit dem Grundwerkstoff des Basiskörpers (2) metallurgisch verbindet.

2. Verfahren nach Anspruch 1, **dadurch gekennzeichnet, dass**
die Email-Beschichtung (10) ein Schmelzgemisch ist, welches glasbildende Oxide sowie Borax, Feldspat, Quarz, Fluorid, Soda, Natriumnitrat und Trübungsmittel aufweist.

3. Verfahren nach Anspruch 1 oder 2, **dadurch gekennzeichnet, dass**
die Email-Beschichtung (10) Kobalt-, Mangan- und/oder Nickeloxide aufweist.

4. Verfahren nach einem der vorhergehenden Ansprüche,
**dadurch gekennzeichnet, dass**
die Email-Beschichtung (10) als Korrosions- und Verschließschutzschicht eine mehrfach höhere Härte als der Basiskörper (2) aus Aluminium oder aus einer Aluminiumlegierung hat.

5. Verfahren nach einem der vorhergehenden Ansprüche,
**dadurch gekennzeichnet, dass**
die zumindest bereichsweise Vorbearbeitung der Bremsscheibe (1) mittels eines Drehverfahrens, bevorzugt mittels eines Trockendrehverfahrens durchgeführt wird.

6. Verfahren nach einem der vorhergehenden Ansprüche,
**dadurch gekennzeichnet, dass**
der vorbearbeitete Bereich eine Rauigkeit Rz von 5 bis 15 µm aufweist.

7. Verfahren nach einem der vorhergehenden Ansprüche,
**dadurch gekennzeichnet, dass**
die Email-Beschichtung (10) durch Aufsprühen aufgebracht wird.

8. Verfahren nach einem der Ansprüche 1 bis 6, **dadurch gekennzeichnet, dass**
die Email-Beschichtung (10) in einem Tauchbad aufgebracht wird.

9. Verfahren nach einem der vorhergehenden Ansprüche,
**dadurch gekennzeichnet, dass**
die aufgebrachte Email-Beschichtung (10) getrocknet wird, wobei die Bremsscheibe (1) daran anschließend einer Glühbehandlung unterzogen wird.

10. Verfahren nach einem der vorhergehenden Ansprüche,
**dadurch gekennzeichnet, dass**
die aufgebrachte Email-Beschichtung (10) einer mechanischen Nachbearbeitung unterzogen wird.

11. Bremsscheibe für ein Fahrzeug, hergestellt mit einem Verfahren nach einem der vorhergehenden Ansprüche, umfassend einen Basiskörper (2) aus Aluminium oder aus einer Aluminiumlegierung und Reibflächen (7,8), mit einer zumindest bereichsweise angeordneten Schutzschicht,
**gekennzeichnet durch**
eine Email-Beschichtung (10), welche als Korrosions- und/oder Verschleißschutzschicht zumindest an den Reibflächen (7,8) angeordnet ist.

12. Bremsscheibe nach Anspruch 11, **dadurch gekennzeichnet, dass**
die Email-Beschichtung (10) vollständig am Basiskörper (2) angeordnet ist.

13. Bremsscheibe nach einem der Ansprüche 11 oder 12,
**dadurch gekennzeichnet, dass**
die Email-Beschichtung (10) eine Dicke zwischen 50 und 1000 µm aufweist.

14. Bremsscheibe nach einem der Ansprüche 11 bis 13,
**dadurch gekennzeichnet, dass**
mit einer Email-Beschichtung (10) versehene Kanten des Basiskörpers (2) einen Radius R aufweisen, der mindestens 3-mal größer ist als die Schichtdicke der Email-Beschichtung (10) im Bereich des Radius der Kanten.

15. Bremsscheibe nach einem der Ansprüche 11 bis 14,
**dadurch gekennzeichnet, dass**
die Email-Beschichtung zumindest an den Reibflächen folgende Bestandteile in Gewichtsanteilen aufweist:
| | |
|---|---|
| SiO₂ | 5 - 50 %; |
| BaO | 2 - 20 %; |
| B₂O₃ | 0,5 - 10 %; |
| Li₂O | 0,5 - 15 %; |
| K₂O | 5 - 30 %; |
| Na₂O | 5 - 44 %; |
| Sb₂O₃ | 0,5 - 25 %; und |
| TiO₂ | 2 - 40%. |

## Claims

1. Method for producing a brake disc (1) for a vehicle, in which a protective layer is arranged on a base member (2) of the brake disc (1) having friction surfaces (7, 8), wherein the base member (2) is formed of aluminum or of an aluminum alloy and an enamel coating (10) is arranged at least on the friction surfaces (7, 8),
comprising at least the following steps:
- pre-machining at least the friction surfaces (7, 8) of the base member (2) in blank form;
- applying an enamel coating (10) as an anti-corrosion and/or anti-wear layer at least onto the friction surfaces (7, 8) of the brake disc (1), and
- post-treating the base member (2) coated at least in places, wherein the enamel coating (10) bonds metallurgically to the base material of the base member (2).

2. Method according to Claim 1, **characterized in that** the enamel coating (10) is a melt mixture which comprises glass-forming oxides together with borax, feldspar, quartz, fluoride, soda, sodium nitrate and opacifiers.

3. Method according to Claim 1 or 2, **characterized in that**
the enamel coating (10) comprises oxides of cobalt, manganese and/or nickel.

4. Method according to one of the preceding claims, **characterized in that**
the enamel coating (10) as anti-corrosion and anti-wear layer has a hardness which is a multiple of that of the base member (2) of aluminum or of an aluminum alloy.

5. Method according to one of the preceding claims, **characterized in that**
pre-machining at least in places of the brake disc (1) is carried out by means of a turning method, preferably by means of a dry turning method.

6. Method according to one of the preceding claims, **characterized in that**
the pre-machined region has a roughness Rz of 5 to 15 µm.

7. Method according to one of the preceding claims, **characterized in that**
the enamel coating (10) is applied by spraying.

8. Method according to one of Claims 1 to 6, **characterized in that**
the enamel coating (10) is applied in a dip bath.

9. Method according to one of the preceding claims, **characterized in that**
the applied enamel coating (10) is dried, wherein the brake disc (1) is subsequently subjected to a baking treatment.

10. Method according to one of the preceding claims, **characterized in that**
the applied enamel coating (10) is subjected to mechanical post-machining.

11. Brake disc for a vehicle, produced by a method according to one of the preceding claims, comprising a base member (2) of aluminum or of an aluminum alloy and friction surfaces (7, 8), having a protective layer arranged at least in places, **characterized by**
an enamel coating (10) which is arranged as an anti-corrosion and/or anti-wear layer at least on the friction surfaces (7, 8).

12. Brake disc according to Claim 11, **characterized in that**
the enamel coating (10) is arranged completely on the base member (2).

13. Brake disc according to one of Claims 11 or 12, **characterized in that**
the enamel coating (10) has a thickness of between 50 and 1000 µm.

14. Brake disc according to one of Claims 11 to 13, **characterized in that**
edges of the base member (2) provided with an enamel coating (10) have a radius R which is at least 3 times greater than the layer thickness of the enamel coating (10) in the region of the edge radius.

15. Brake disc according to one of Claims 11 to 14, **characterized in that**
the enamel coating comprises at least on the friction surfaces the following constituents in proportions by weight:
| | |
|---|---|
| SiO₂ | 5 - 50%; |
| BaO | 2 - 20%; |
| B₂O₃ | 0.5 - 10%; |
| Li₂O | 0.5 - 15%; |
| K₂O | 5 - 30%; |
| Na₂O | 5 - 44%; |
| Sb₂O₃ | 0.5 - 25%; and |
| TiO₂ | 2 - 40%. |

## Revendications

1. Procédé de fabrication d'un disque de frein (1) pour un véhicule, selon lequel une couche de protection est agencée sur un corps de base (2) du disque de frein (1) comprenant des surfaces de frottement (7, 8), le corps de base (2) étant formé en aluminium ou en un alliage d'aluminium et un revêtement d'émail (10) étant agencé au moins sur les surfaces de frottement (7, 8), comprenant au moins les étapes suivantes :
- le prétraitement d'au moins les surfaces de frottement (7, 8) du corps de base (2) à l'état d'ébauche ;
- l'application d'un revêtement d'émail (10) sur au moins les surfaces de frottement (7, 8) du disque de frein (1) en tant que couche de protection contre la corrosion et/ou l'usure, et
- le post-traitement du corps de base (2) revêtu au moins en zones, le revêtement d'émail (10) étant relié métallurgiquement avec le matériau de base du corps de base (2).

2. Procédé selon la revendication 1, **caractérisé en ce que** le revêtement d'émail (10) est un mélange de fusion, qui comprend des oxydes formant du verre, ainsi que du borax, du feldspath, du quartz, du fluorure, de la soude, du nitrate de sodium et des agents opacifiants.

3. Procédé selon la revendication 1 ou 2, **caractérisé en ce que** le revêtement d'émail (10) comprend des oxydes de cobalt, de manganèse et/ou de nickel.

4. Procédé selon l'une quelconque des revendications précédentes, **caractérisé en ce que** le revêtement d'émail (10) en tant que couche de protection contre la corrosion et l'usure a une dureté plusieurs fois plus élevée que le corps de base (2) en aluminium ou en un alliage d'aluminium.

5. Procédé selon l'une quelconque des revendications précédentes, **caractérisé en ce que** le prétraitement au moins en zones du disque de frein (1) est réalisé au moyen d'un procédé de rotation, de préférence au moyen d'un procédé de rotation à sec.

6. Procédé selon l'une quelconque des revendications précédentes, **caractérisé en ce que** la zone prétraitée présente une rugosité Rz de 5 à 15 µm.

7. Procédé selon l'une quelconque des revendications précédentes, **caractérisé en ce que** le revêtement d'émail (10) est appliqué par pulvérisation.

8. Procédé selon l'une quelconque des revendications 1 à 6, **caractérisé en ce que** le revêtement d'émail (10) est appliqué dans un bain d'immersion.

9. Procédé selon l'une quelconque des revendications précédentes, **caractérisé en ce que** le revêtement d'émail appliqué (10) est séché, le disque de frein (1) étant ensuite soumis à un traitement de recuit.

10. Procédé selon l'une quelconque des revendications précédentes, **caractérisé en ce que** le revêtement d'émail appliqué (10) est soumis à un post-traitement mécanique.

11. Disque de frein pour un véhicule, fabriqué par un procédé selon l'une quelconque des revendications précédentes, comprenant un corps de base (2) en aluminium ou en un alliage d'aluminium et des surfaces de frottement (7, 8), comprenant une couche de protection agencée au moins en zones,
**caractérisé par**
un revêtement d'émail (10), qui est agencé au moins sur les surfaces de frottement (7, 8) en tant que couche de protection contre la corrosion et/ou l'usure.

12. Disque de frein selon la revendication 11, **caractérisé en ce que** le revêtement d'émail (10) est agencé sur la totalité du corps de base (2).

13. Disque de frein selon l'une quelconque des revendications 11 ou 12, **caractérisé en ce que** le revêtement d'émail (10) présente une épaisseur comprise entre 50 et 1 000 µm.

14. Disque de frein selon l'une quelconque des revendications 11 à 13, **caractérisé en ce que** des bords du corps de base (2) munis d'un revêtement d'émail (10) présentent un rayon R qui est au moins 3 fois plus grand que l'épaisseur de couche du revêtement d'émail (10) dans la zone du rayon des bords.

15. Disque de frein selon l'une quelconque des revendications 11 à 14, **caractérisé en ce que** le revêtement d'émail au moins sur les surfaces de frottement comprend les constituants suivants en proportions en poids :
| | |
|---|---|
| SiO₂ | 5 à 50 % ; |
| BaO | 2 à 20 % ; |
| B₂O₃ | 0, 5 à 10 % ; |
| Li₂O | 0,5 à 15 % ; |
| K₂O | 5 à 30 % ; |
| Na₂O | 5 à 44 % ; |
| Sb₂O₃ | 0,5 à 25 % ; et |
| TiO₂ | 2 à 40 %. |
